# EUROPÄISCHE PATENTSCHRIFT

(11) **EP 2 193 963 B1**
(45) Veröffentlichungstag und Bekanntmachung des Hinweises auf die Patenterteilung: **27.08.2014**
(21) Anmeldenummer: 09172303.1
(22) Anmeldetag: 06.10.2009
(51) Int. Cl.: B60S 1/38

(54) **Wischblatt**
Wiper blade
Raclette d'essuie-glace

(30) Priorität: 05.12.2008 DE 102008044389
(43) Veröffentlichungstag der Anmeldung: 09.06.2010
(73) Patentinhaber: Robert Bosch GmbH, 70469 Stuttgart (DE)
(72) Erfinder: Op't Roodt, Inigo, 3500 Hasselt (BE)

(56) Entgegenhaltungen:
- EP-A1- 1 683 695
- EP-A1- 1 857 337
- DE-A1-102006 020 524
- US-A1- 2004 045 116
- US-B2- 7 210 189

## Beschreibung

### Stand der Technik

Die Erfindung geht von einem Wischblatt nach dem Oberbegriff des Anspruchs 1 aus.

Aus der DE 10 2006 020 524 A1 ein Wischblatt in Flachbalkenbauweise bekannt, das in einer Kopfleiste seiner Wischleiste einen Längskanal für eine Federschiene als Tragelement aufweist. Der Längskanal und die Federschiene werden seitlich und von unten von Halteschienen des Spoilers umfasst. An den Enden des Wischblatts sind Endkappen aufgesetzt. Von diesen kann mindestens eine entfallen, wenn sie durch ein am Spoiler angeformtes Endstück ersetzt wird.

Aus der US 7 210 189 B2 ist ein Wischblatt bekannt, bei dem an einem Spoiler eine Halteschiene für eine Wischleiste angeformt ist. Oberhalb der Halteschiene befindet sich ein zentraler Längskanal zur Aufnahme einer Federschiene, die an ihren Enden ein Stück weit über das Spoilerprofil vorsteht. In dem vorstehenden Ende befinden sich Stanzlöcher zum Fixieren von Endkappen.

Aus der US 2004/0045116 A1 ist ein Wischblatt bekannt, dessen Wischleiste von einem Tragbügelsystem gehalten wird. Die Wischleiste besitzt eine Wischlippe, die über einen Kippsteg mit einer Kopfleiste verbunden ist, an der auf der der Wischlippe abgewandten Seite ein Längskanal zur Aufnahme einer flachen Längsschiene mit einem rechteckigen Querschnittprofil angeformt ist. Die Deckwand des Längskanals ist mittig durch einen Längsschlitz geteilt, sodass zu beiden Seiten des Längsschlitzes Halteschultern gebildet werden, die die Längsschiene umfassen. An beiden Enden der Wischleiste sind Endkappen vorgesehen, die mit einem zur Wischleiste hin offenen u-förmigen Profil die Längsschiene mittels Halteschultern umfassen. Die Deckwand der Endkappe besitzt im Bereich des Längsschlitzes des Längskanals eine Federzunge mit einem Rastnocken, der zur Mitte der Wischleiste hin angeschrägt ist, und in montiertem Zustand durch den Längsschlitz in ein Rastloch der Längsschiene einrastet, sodass die Längsschiene zwischen dem Rastzapfen und einer äußeren Stirnwand der Endkappe fixiert ist.

### Offenbarung der Erfindung

Nach der Erfindung weist eine Deckwand des Längskanals eine von einer Stirnseite ausgehende Aussparung auf, durch die ein Rastelement der Endkappe in ein Rastloch der Federschiene eingreift. Diese besitzt an ihrer Stirnseite im Bereich der Aussparung der Deckwand eine Aussparung, in die eine Anschlagnase passt, die an einer nach außen weisenden Stirnseite der Endkappe bündig anschließend angeordnet ist.

Durch die erfindungsgemäße Gestaltung kann der Überstand der Endkappen an den Stirnseiten des Wischblatts gegenüber der Wischleiste und dem Tragelement in Form einer oder mehrerer Federschienen auf null reduziert werden. Dadurch wird die Wischzone maximiert, und man erreicht zusätzliche Freiheiten in der Gestaltung des Wischblattdesigns.

In montiertem Zustand stützt sich die Endkappe an einem Steg der Federschiene ab, der sich zwischen der stirnseitigen Aussparung der Federschiene und dem Rastloch ergibt. Dabei liegt die Anschlagnase an der nach außen weisenden Seite des Steges an, während das Rastelement die Bewegung der Federschiene nach innen begrenzt. Damit die Federschiene sicher erfasst wird, ist es zweckmäßig, dass die Anschlagnase und das Rastelement in Richtung auf die Wischlippe über die Federschiene hinaus reichen. Hierzu ist in dem Boden des Längskanals eine Längsnut vorgesehen, in die die Anschlagnase und gegebenenfalls das Rastelement eintauchen. Die Längsnut kann sich über die gesamte Länge der Wischleiste erstrecken, es reicht jedoch aus, wenn sie in dem Bereich der Endkappe vorgesehen wird.

Das Rastelement besitzt zweckmäßigerweise eine Federzunge, die in Richtung auf die Wischlippe wirkt und mit einer Rastnase an ihrem Ende an dem Steg anliegt. Damit sich die Rastnase während des Wischbetriebs nicht selbstständig löst, besitzt sie einen Sicherheitshaken, der zur Mitte des Wischblatts gerichtet ist. Der Sicherheitshaken kann sich an der gegenüberliegenden Seite der Aussparung in der Deckwand des Längskanals abstützen, wenn sich die Wischleiste während der Wischbewegung in Längsrichtung verschieben sollte. Um eine Längsverschiebung der Wischleiste gegenüber der Federschiene zuzulassen, - eine solche Längsverschiebung ist wegen der unterschiedlichen Krümmungen der Fahrzeugscheiben wünschenswert -, ist die Länge der Aussparung in der Deckwand des Längskanals auf die zu erwartenden Fahrzeuggegebenheiten abgestimmt.

Die Längenanpassung der Wischleiste auf Grund der unterschiedlichen Krümmungsradien kann ferner dadurch verbessert werden, dass die Wischleiste in einem Mehrstoffextrusionsverfahren gefertigt ist, wobei der Bereich des Längskanals aus einem härteren Material besteht als die übrige Wischleiste. Dadurch werden die Reibung zwischen der Wischleiste und dem Tragelement und der Verschleiß vermindert.

Außer für das Wischblatt als Baueinheit wird auch Schutz für ein Bauelement, insbesondere für seine Endkappe beansprucht, die durch ihre besondere Gestaltung für die Verwendung bei dem erfindungsgemäßen Wischblatt geeignet sind.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 eine perspektivische Teilansicht eines Endes eines Wischblatts,
Fig. 2 eine Teilansicht nach Fig. 1 während der Montage einer Endkappe,
Fig. 3 eine Teilansicht nach Fig. 1 mit einem Längsschnitt durch die Endkappe entsprechend der Ebene III in Fig. 1 und
Fig. 4 eine perspektivische Ansicht der Endkappe von unten.

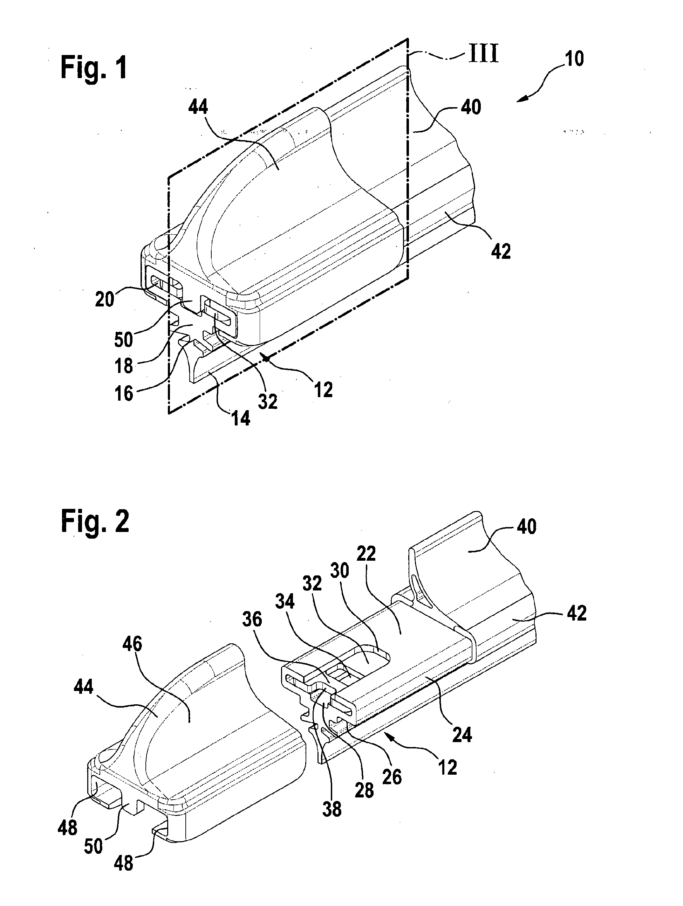

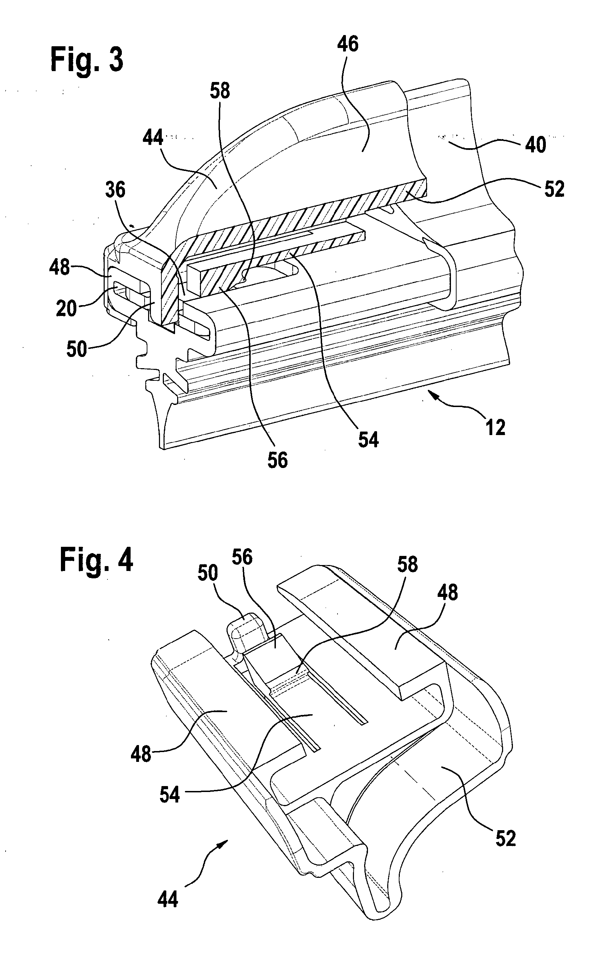

Von einem Wischblatt 10 ist in Fig. 1 bis Fig. 3 nur ein Ende dargestellt, soweit es zum Verständnis der Erfindung erforderlich ist. Das andere Ende des Wischblatts 10 kann gleich oder ähnlich gestaltet sein, sofern es ebenfalls eine Endkappe 44 besitzt.

Das Wischblatt 10 besitzt eine Wischleiste 12, deren Wischlippe 14 über einen Kippsteg 16 mit einer Kopfleiste 18 verbunden ist. Diese weist auf der der Wischlippe 14 abgewandten Seite einen Längskanal 20 auf, der im Wesentlichen durch eine Deckwand 22, zwei Seitenwänden 24 und einen Boden 26 gebildet wird. Der Längskanal 20 erstreckt sich über die gesamte Länge des Wischblatts 10. In ihm befindet sich als Tragelement eine Federschiene 32. Diese könnte auch bei sonst ähnlicher Gestaltung in Längsrichtung geteilt sein.

Wie in Fig. 2 ersichtlich ist, besitzt das Ende der Wischleiste 12 in der Deckwand 22 des Längskanals 20 eine Aussparung 30, die von einer Stirnseite ausgeht und sich ein Stück weit zur Mitte des Wischblatts 10 erstreckt. Die Aussparung 30 ist in Längsrichtung so dimensioniert, dass sich bei montierter Endkappe 44 die Wischleiste 12 in Längsrichtung um einen gewissen Betrag zur Federschiene 32 bewegen kann, damit sie ohne Zwang den unterschiedlichen Krümmungen einer Fahrzeugscheibe folgen kann.

Im Bereich der Aussparung 30 in der Deckwand 22 besitzt die Federschiene 32 ein Rastloch 34, das zur Stirnseite der Federschiene 32 durch einen Steg 36 begrenzt ist. Auf der der Stirnseite zugewandten Seite des Steges 36 befindet sich eine weitere Aussparung 38 für eine Anschlagnase 50, die an der äußeren Stirnseite der Endkappe 44 vorgesehen ist, und bündig mit der äußeren Kontur der Endkappe 44 abschließt.

Die Deckwand 22 des Längskanals 20 wird von einem Spoiler 40 überdeckt, der mit seitlichen Führungsprofilen 42 die Seitenwände 24 und zum Teil den Boden 26 des Längskanals 20 umfasst.

Die Endkappe 44 ist ähnlich aufgebaut wie der Spoiler 40. Sie besitzt ein Strömungsprofil 46 und seitliche Führungsprofile 48, die ebenfalls die Seitenwände 24 und zum Teil den Boden 26 des Längskanals 20 umfassen. Die Endkappe 44 wird vom Ende auf die Wischleiste 12 geschoben (Fig. 2), bis die Anschlagnase 50 in die Aussparung 38 der Federschiene 32 eintaucht und am Steg 36 anliegt. Dabei rastet ein Rastelement, bestehend aus einer Federzunge 54 und einer zum Steg 36 weisenden Rastnase 56, mit der Rastnase 56 in das Rastloch 34 der Federschiene 32. Somit wird die Endkappe 44 durch die Anschlagnase 50 und die Rastnase 56 in Längsrichtung am Steg 36 relativ zur Federschiene 32 fixiert.

Im montierten Zustand schließt die äußere Stirnseite der Endkappe 44 und die Anschlagnase 50 dicht mit der Stirnseite der Wischleiste 12 und der Federschiene 32 ab. Dabei taucht die Anschlagnase 50 in eine Längsnut 28, die im Boden 26 des Längskanals 20 angeordnet ist und sich mindestens in Längsrichtung über den Bereich der Endkappe 44 erstreckt. In die gleiche Längsnut 28 kann auch die Rastnase 56 eintauchen, sodass der Steg 36 sicher von der Anschlagnase 50 und der Rastnase 56 eingeschlossen ist. Die Rastnase 56 besitzt an ihrem zur Mitte des Wischblatts 10 weisenden Seite einen Sicherheitshaken 58. Dieser dient dazu, dass sich die Rastnase 56 bei einer Bewegung der Wischleiste10 in Längsrichtung nicht selbsttätig löst, sondern an der dem Sicherheitshaken 58 gegenüberliegenden Seite der Aussparung 30 gehalten wird. Die Endkappe 44 schließt sich harmonisch an den Spoiler 40 an, indem er diesen mit einem Anschlussprofil 52 überlappt.

## Patentansprüche

1. Wischblatt (10) mit einer gummielastischen Wischleiste (12) mit einer Wischlippe (14), die mit einer Kopfleiste (18) verbunden ist, an der auf der der Wischlippe (14) abgewandten Seite ein Längskanal (20) zur Aufnahme eines Tragelements in Form einer Federschiene (32) angeformt ist, wobei an den Enden des Wischblatts (10) mindestens eine Endkappe (44) vorgesehen ist, **dadurch gekennzeichnet, dass** eine Deckwand (22) des Längskanals (20) eine von einer Stirnseite ausgehende Aussparung (30) aufweist, durch die ein Rastelement (54, 56, 58) der Endkappe (44) in ein Rastloch (34) der Federschiene (32) eingreift, wobei die Federschiene (32) an ihrer Stirnseite im Bereich der Aussparung (30) der Deckwand (22) eine Aussparung (38) besitzt, in die eine Anschlagnase (50) passt, die an einer nach außen weisenden Stirnseite einer Endkappe (44) bündig anschließend angeordnet ist.

2. Wischblatt (10) nach Anspruch 1, **dadurch gekennzeichnet, dass** der Längskanal (20) in seinem Boden (26) eine Längsnut (28) aufweist, in deren Ende die Anschlagnase (50) der Endkappe (44) eingreift.

3. Wischblatt (10) nach Anspruch 1 oder 2, **dadurch gekennzeichnet, dass** das Rastelement eine Federzunge (54) besitzt, die mit einer Rastnase (56) an einem Steg (36) anliegt, der zwischen dem Rastloch (34) und der Aussparung (38) der Federschiene (32) vorgesehen ist.

4. Wischblatt (10) nach Anspruch 3, **dadurch gekennzeichnet, dass** die Rastnase (56) einen Sicherheitshaken (58) hat, der zur Mitte des Wischblatts (10) gerichtet ist.

5. Wischblatt (10) nach einem der vorhergehenden Ansprüche, **dadurch gekennzeichnet, dass** die Wischleiste (12) in einem Mehrstoffextrusionsverfahren gefertigt ist, wobei der Bereich des Längskanals (20) aus einem härteren Material besteht als die übrige Wischleiste (12).

6. Wischblatt (10) nach einem der vorhergehenden Ansprüche, **dadurch gekennzeichnet, dass** ein Spoiler (40) die Deckwand (22) des Längskanals (20) bis auf die Bereiche an den Enden überdeckt und mit seinen seitlichen Führungsprofilen (42) die Seitenwände (24) sowie ein Teil des Bodens (26) umgreift.

7. Endkappe (44) zum Verwenden bei einem Wischblatt (10) nach einem der vorhergehenden Ansprüche, **dadurch gekennzeichnet, dass** sie eine mit der äußeren Stirnseite bündig abschließende Anschlagnase (50), die in eine Aussparung (38) an der Stirnseite der Federschiene (32) passt, und eine in Richtung auf die Wischlippe (14) wirkende Federzunge (54) mit einer Rastnase (56) besitzt, die an ihrem zur Mitte der Wischblatts weisenden Seite einen Sicherheitshaken (58) hat.

8. Endkappe (44) nach Anspruch 7, **dadurch gekennzeichnet, dass** sie an der Seite des Spoilers (40) ein Anschlussprofil (52) besitzt, das im montierten Zustand den Spoiler (40) ein Stück weit überlappt.

## Claims

1. Wiper blade (10) with a rubber-elastic wiper strip (12) having a wiping lip (14) which is connected to a head strip (18), on which, on the side facing away from the wiping lip (14), a longitudinal channel (20) for receiving a supporting element in the form of a spring rail (32) is integrally formed, wherein at least one end cap (44) is provided at the ends of the wiper blade (10), **characterized in that** a top wall (22) of the longitudinal channel (20) has a recess (30) which starts from one end side and by means of which a latching element (54, 56, 58) of the end cap (44) engages in a latching hole (34) in the spring rail (32), wherein the spring rail (32), on the end side thereof in the region of the recess (30) in the top wall (22), has a recess (38) into which a stop lug (50) fits, said stop lug being arranged so as to adjoin an outwardly facing end side of an end cap (44) in a flush manner.

2. Wiper blade (10) according to Claim 1, **characterized in that** the base (26) of the longitudinal channel (20) has a longitudinal groove (28), in the end of which the stop lug (50) of the end cap (44) engages.

3. Wiper blade (10) according to Claim 1 or 2, **characterized in that** the latching element has a spring tongue (54) which bears with a latching lug (56) against a web (36) which is provided between the latching hole (34) and the recess (38) in the spring rail (32).

4. Wiper blade (10) according to Claim 3, **characterized in that** the latching lug (56) has a safety hook (58) which is directed to the centre of the wiper blade (10).

5. Wiper blade (10) according to one of the preceding claims, **characterized in that** the wiper strip (12) is manufactured in a multi-substance extrusion process wherein the region of the longitudinal channel (20) is composed of a harder material than the rest of the wiper strip (12).

6. Wiper blade (10) according to one of the preceding claims, **characterized in that** a spoiler (40) covers the top wall (22) of the longitudinal channel (20) up to the regions at the ends and the lateral guide profiles (42) of said spoiler engage around the side walls (24) and around part of the base (26).

7. End cap (44) for use in a wiper blade (10) according to one of the preceding claims, **characterized in that** said end cap has a stop lug (50) which ends flush with the outer end side and fits into a recess (38) on the end side of the guide rail (32), and a spring tongue (54) which acts in the direction of the wiper lip (14) and has a latching lug (56) which has a safety hook (58) on the side thereof facing the centre of the wiper blade.

8. End cap (44) according to Claim 7, **characterized in that** said end cap has a connecting profile (52) at the side of the spoiler (40), said connecting profile, in the fitted state, overlapping a section of the spoiler (40).

## Revendications

1. Balai d'essuie-glace (10) comprenant une raclette de balai d'essuie-glace ayant l'élasticité du caoutchouc (12) comprenant une lèvre de balai d'essuie-glace (14) qui est connectée à une baguette de tête (18) sur laquelle, du côté opposé à la lèvre de balai d'essuie-glace (14), est façonné un canal longitudinal (20) pour recevoir un élément de support sous la forme d'un rail élastique (32), au moins un embout d'extrémité (44) étant prévu au niveau des extrémités du balai d'essuie-glace (10), **caractérisé en ce qu'**une paroi de recouvrement (22) du canal longitudinal (20) présente un évidement (30) partant d'un côté frontal, à travers lequel un élément d'encliquetage (54, 56, 58) de l'embout d'extrémité (44) s'engage dans un trou d'encliquetage (34) du rail élastique (32), le rail élastique (32) possédant au niveau de son côté frontal, dans la région de l'évidement (30) de la paroi de recouvrement (22), un évidement (38) dans lequel s'adapte un ergot de butée (50) qui est disposé de manière à se raccorder en affleurement à un côté frontal tourné vers l'extérieur d'un embout d'extrémité (44).

2. Balai d'essuie-glace (10) selon la revendication 1, **caractérisé en ce que** le canal longitudinal (20) présente, dans son fond (26), une rainure longitudinale (28), dans l'extrémité de laquelle s'engage l'ergot de butée (50) de l'embout d'extrémité (44).

3. Balai d'essuie-glace (10) selon la revendication 1 ou 2, **caractérisé en ce que** l'élément d'encliquetage possède une langue élastique (54) qui s'applique avec un ergot d'encliquetage (56) contre une nervure (36) qui est prévue entre le trou d'encliquetage (34) et l'évidement (38) du rail élastique (32).

4. Balai d'essuie-glace (10) selon la revendication 3, **caractérisé en ce que** l'ergot d'encliquetage (56) présente un crochet de sécurité (58) qui est orienté vers le centre du balai d'essuie-glace (10).

5. Balai d'essuie-glace (10) selon l'une quelconque des revendications précédentes, **caractérisé en ce que** la raclette de balai d'essuie-glace (12) est fabriquée suivant un procédé d'extrusion à plusieurs composants, la région du canal longitudinal (20) se composant d'un matériau plus dur que le reste de la raclette de balai d'essuie-glace (12).

6. Balai d'essuie-glace (10) selon l'une quelconque des revendications précédentes, **caractérisé en ce qu'**un déflecteur (40) recouvre la paroi de recouvrement (22) du canal longitudinal (20) à l'exception des régions au niveau des extrémités et vient en prise avec ses profils de guidage latéraux (42) autour des parois latérales (24) ainsi qu'autour d'une partie du fond (26).

7. Embout d'extrémité (44) destiné à l'utilisation dans un balai d'essuie-glace (10) selon l'une quelconque des revendications précédentes, **caractérisé en ce qu'**il possède un ergot de butée (50) se terminant en affleurement avec le côté frontal extérieur, lequel ergot de butée s'adapte dans un évidement (38) au niveau du côté frontal du rail élastique (32), et une langue élastique (54) agissant dans la direction de la lèvre de balai d'essuie-glace (14) avec un ergot d'encliquetage (56) qui présente, au niveau de son côté tourné vers le centre du balai d'essuie-glace, un crochet de sécurité (58).

8. Embout d'extrémité (44) selon la revendication 7, **caractérisé en ce qu'**il possède, au niveau du côté du déflecteur (40), un profil de raccordement (52) qui, dans l'état monté, chevauche le déflecteur (40) sur une certaine distance.
